# EUROPEAN PATENT SPECIFICATION

(11) **EP 3 617 979 B1**
(45) Date of publication and mention of the grant of the patent: **01.03.2023**
(21) Application number: 19189189.4
(22) Date of filing: 29.09.2005
(51) Int. Cl.: G06Q 30/00, G06Q 20/04, G06Q 30/06, G06Q 20/40

(54) **METHOD AND SYSTEM FOR IDENTIFYING USERS AND DETECTING FRAUD BY USE OF THE INTERNET**
VERFAHREN UND SYSTEM ZUR IDENTIFIZIERUNG VON BENUTZERN UND ZUR DETEKTION VON BETRUG DURCH VERWENDUNG DES INTERNETS
PROCÉDÉ ET SYSTÈME D'IDENTIFICATION D'UTILISATEURS ET DE DÉTECTION DE FRAUDES EN UTILISANT INTERNET

(30) Priority: 27.06.2005 US 694768 P
(43) Date of publication of application: 04.03.2020
(62) Divisional of application: 05818903.6
(73) Proprietor: The 41st Parameter, Inc., Scottsdale, AZ 85254 (US)
(72) Inventor: EISEN, Ori, Scottsdale, AZ Arizona 85254-2568 (US)
(74) Representative: D Young & Co LLP

(56) References cited:
- EP-A- 0 418 144
- EP-A- 0 923 039
- EP-A- 1 256 911
- EP-A1- 0 418 144
- WO-A-02/091226
- WO-A-03/025868
- WO-A-03/075197
- WO-A1-02/091226
- WO-A2-01/95550
- US-A1- 2005 033 703
- US-A1- 2005 131 826

## Description

### BACKGROUND OF THE INVENTION

The invention relates to Internet purchasing or e-tail transactions and specifically to detecting fraud in such transactions when ordering products, services, or downloading information over the Internet.

There is a continuing need to develop techniques, devices, and programs to detect and prevent Internet fraud. The invention provides a method and a system for detecting and preventing Internet fraud by utilizing and analyzing a number of parameters to uniquely identify a customer and a potential fraudulent Internet-based transaction.
US 2005/131826 A1 relates to a centralized authorization and fraud-prevention system for network based transactions.

### DESCRIPTION OF THE PRIOR ART

Many methods and systems have been developed over the years to prevent or detect Internet fraud. Today, to gain consumer confidence and prevent revenue loss, a website operator or merchant desires an accurate and trustworthy way of detecting possible Internet fraud. Merely asking for the user name, address, phone number, and e-mail address will not suffice to detect and determine a probable fraudulent transaction because such information can be altered, manipulated, fraudulently obtained, or simply false.

Typically, an Internet user who accesses a website for obtaining a service, product, or information, not only enters personal information as mentioned above, but is also requested to provide a credit card account number, expiration date, and billing address. An online criminal seeking to obtain goods, services, or access to information (text and/or visuals over the Internet) commonly uses someone else's credit card information to obtain the services or products during the transaction. To prevent such occurrences, websites, via credit card companies and banks, often check to see if the address on the order corresponds or matches the address for the credit card owner.
Although billing and shipping addresses can differ, such as when someone purchases a gift for another, it is a factor to consider in the verification process. Additionally, merchants utilize phone number matching between that of the Internet order and the credit card company database. Another commonly used technique for order verification is e-mail address verification where the website operator sends a message to the user e-mail address asking the customer to confirm the order prior to executing the same. Yet, online thieves frequently use e mail addresses from large portal sites that offer free e-mail accounts. These e-mail addresses are easily disposable and make it harder for the website operator to identify the fraudulent customer before executing the transaction.

More sophisticated websites now capture a variety of parameters from the user known as Common Gateway Interface parameters (CGI parameters). These parameters commonly include non-personal information such as a user Internet Protocol Address (IP Address). Every computer connected to the Internet is assigned a unique number known as its Internet Protocol (IP) Address. Much like a phone number in a home or office, an IP address can be used to identify the specific user or at least the particular computer used for an Internet transaction. In addition, since these numbers are usually assigned in country-based blocks, an IP address can often be used to identify the country from which a computer is connected to the Internet. Yet, IP addresses can change regularly if a user connects to the Internet via a dial-up connection or reboots their computer. Online thieves also have ways of scrambling their IP addresses or adopting another IP address to make it nearly impossible for the website operator to identify the true user. Thus, websites typically use an IP address plus a further non-personal identifier such as a Browser ID (or user agent), a cookie, and/or a registration ID to try to identify a unique user and to prevent fraud in a second transaction.

A Browser ID provides the website operator with a wealth of information about the user such as the software being used to browse or surf the Internet. Additionally, the Browser ID includes information about the user computer operating system, its current version, its Internet browser and the language. Thus, the Browser ID has valuable information for identifying a unique user. The Browser ID may also have more detailed information such as the type of content the user can receive; for example, this lets the website operator know if the user can run applications in FLASH-animation, open a PDF-file, or access a Microsoft Excel document. Yet, Browser IDs from different computers can be similar, as there are so many Internet users and thus many have similar computers with the same capabilities, programs, web browsers, operating systems, and other information. A cookie refers to a piece of information sent from the web server to the user web browser which is saved on the resident browser software. Cookies might contain specific information such as login or registration information, online 'shopping cart' information, user preferences, etc. But cookies can easily be deleted by the computer user, by the browser, or turned off completely so that the server cannot save information on the browser software. Thus, cookies alone cannot serve as a unique identifier to thwart an Internet thief.

Accordingly, what is needed is a method and system that overcomes the problems associated with a typical verification and fraud prevention system for Internet transactions particularly in the purchasing of services, products, or information by uniquely identifying each consumer. Then, when that consumer seeks a second fraudulent purchase, the website operator will detect the same and block the order or, at least, obtain more information to ensure the order is legitimate. The system should be easily implemented within the existing environment and should be adaptable and compatible with existing technology.

### SUMMARY OF THE INVENTION

According to a first aspect there is provided a method for identifying a user computer from other computers, the method comprising the steps of: in the course of a first online transaction between a computer and a merchant web server: obtaining information about the computer including a first local computer time according to a resident computer clock of the computer; measuring a first local server time of the merchant web server; calculating a first delta of time parameter based upon a difference in time between the first local computer time and the first local server time; generating a first computer identifier based at least in part on the first delta of time parameter; in the course of a second online transaction between the computer and the merchant web server: obtaining information about the computer including a second local computer time according to the resident computer clock; measuring a second local server time of the merchant web server; calculating a second delta of time parameter based upon a difference in time between the second local computer time and the second local server time; generating a second computer identifier based at least in part on the second delta of time parameter; flagging the first computer identifier in response to determining the first online transaction may be a fraudulent transaction; comparing the first computer identifier and the second computer identifier; determining that a measured difference between the delta of time parameter of the first computer identifier and the delta of time parameter of the second computer identifier falls within a selected range; and generating an indication that the computer was used in the first online transaction and the second online transaction, based at least on the determination that the measured difference falls within the selected range.

According to a second aspect a computer readable medium having instructions stored thereon that, when executed by a processor, cause the processor to perform a method to identify a user computer from other computers for an online transaction with a merchant, the method comprising: in the course of a first online transaction between a computer and a merchant web server: obtaining information about the computer including a first local computer time according to a resident computer clock of the computer; measuring a first local server time of the merchant web server; calculating a first delta of time parameter based upon a difference in time between the first local computer time and the first local server time; generating a first computer identifier based at least in part on the first delta of time parameter; in the course of a second online transaction between the computer and the merchant web server; obtaining information about the computer including a second local computer time according to the resident computer clock; measuring a second local server time of the merchant web server; calculating a second delta of time parameter based upon a difference in time between the second local computer time and the second local server time; generating a second computer identifier based at least in part on the second delta of time parameter; flagging the first computer identifier in response to determining the first online transaction may be a fraudulent transaction; comparing the first computer identifier and the second computer identifier; determining that a measured difference between the delta of time parameter of the first computer identifier and the delta of time parameter of the second computer identifier falls within a selected range; and generating an indication that the user computer was used in the first online transaction and the second online transaction, based at least on the determination that the measured difference falls within the selected range.

The features and advantages to various aspects of the invention are readily apparent from the following detailed description of the best mode for carrying out the invention when taken in connection with the accompanying chart and other portions of the specification and figures herein.

### BRIEF DESCRIPTION OF THE DRAWINGS

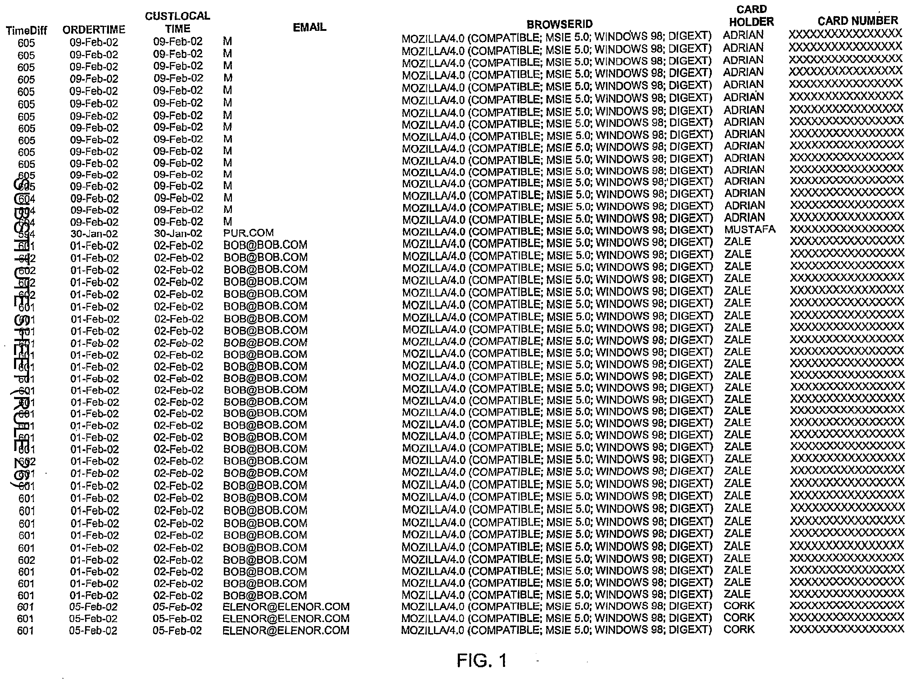

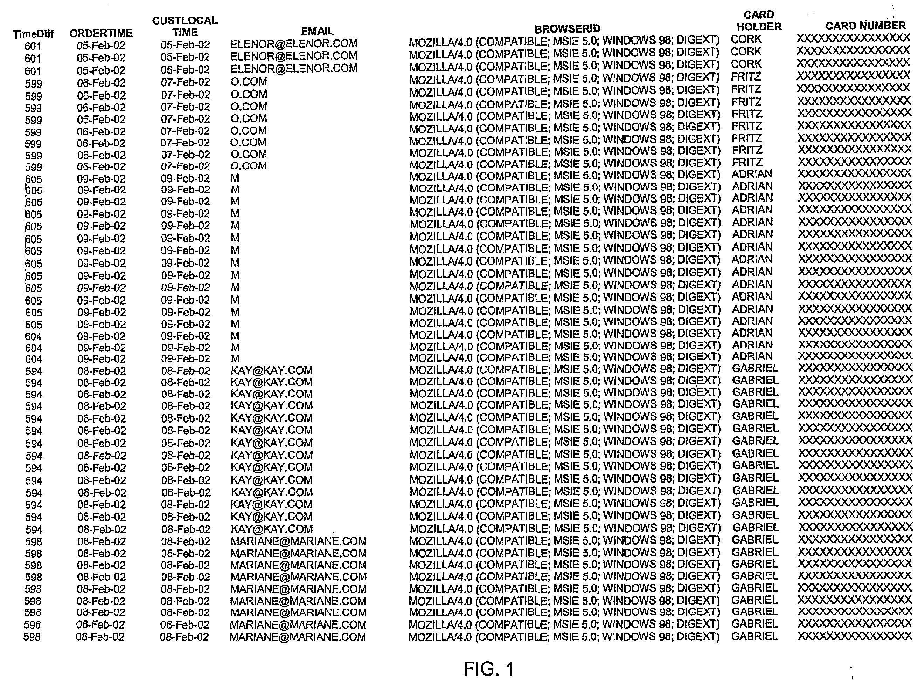

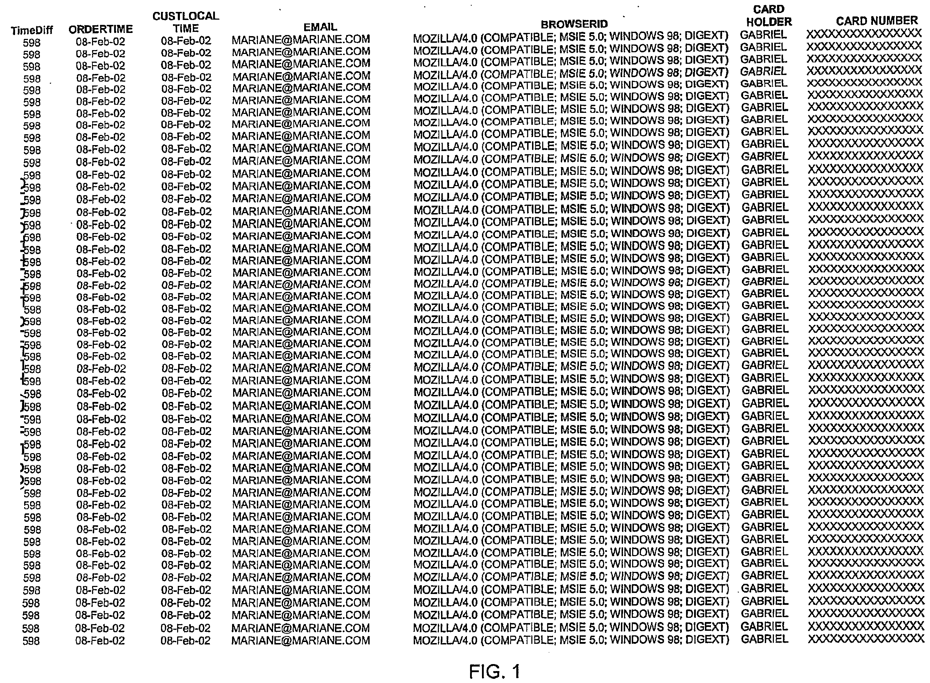

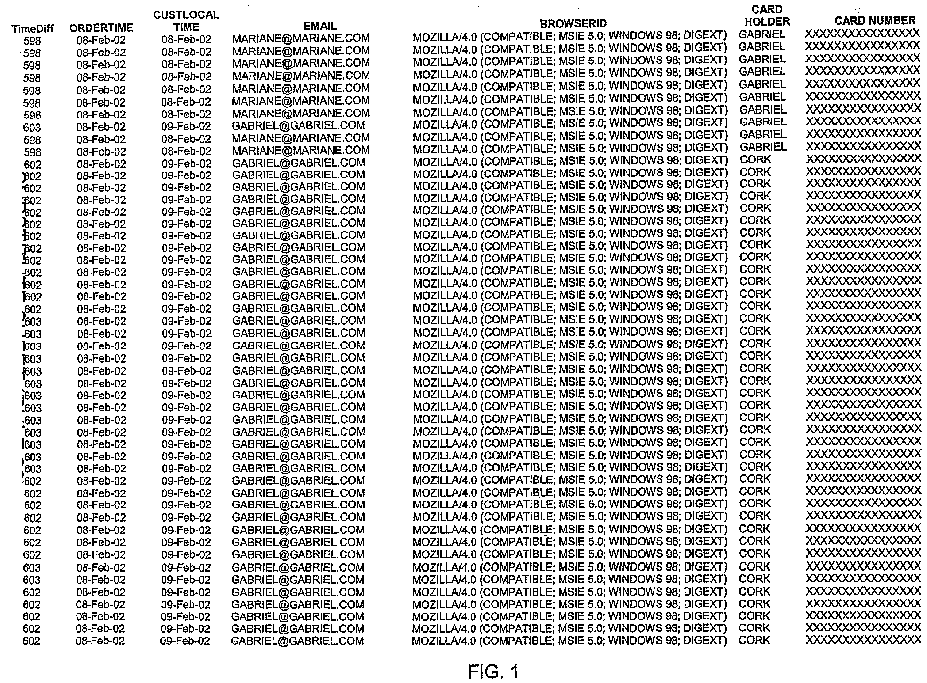

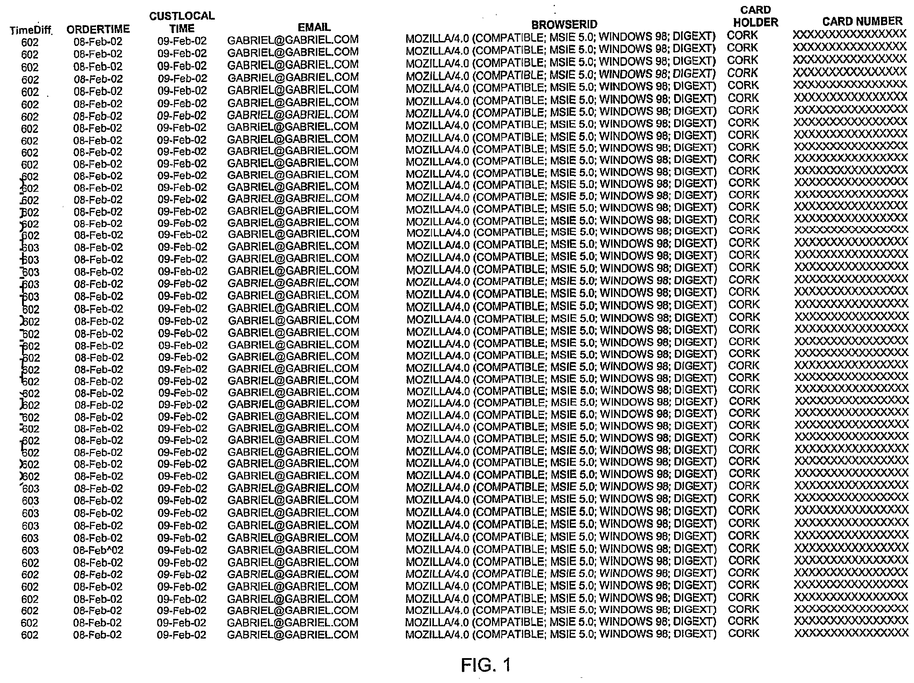

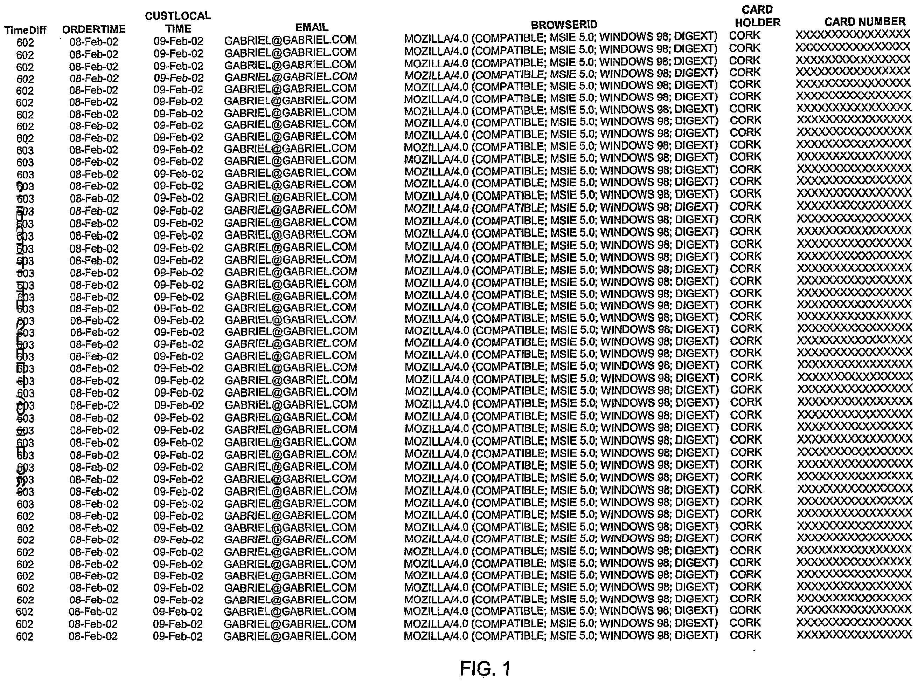

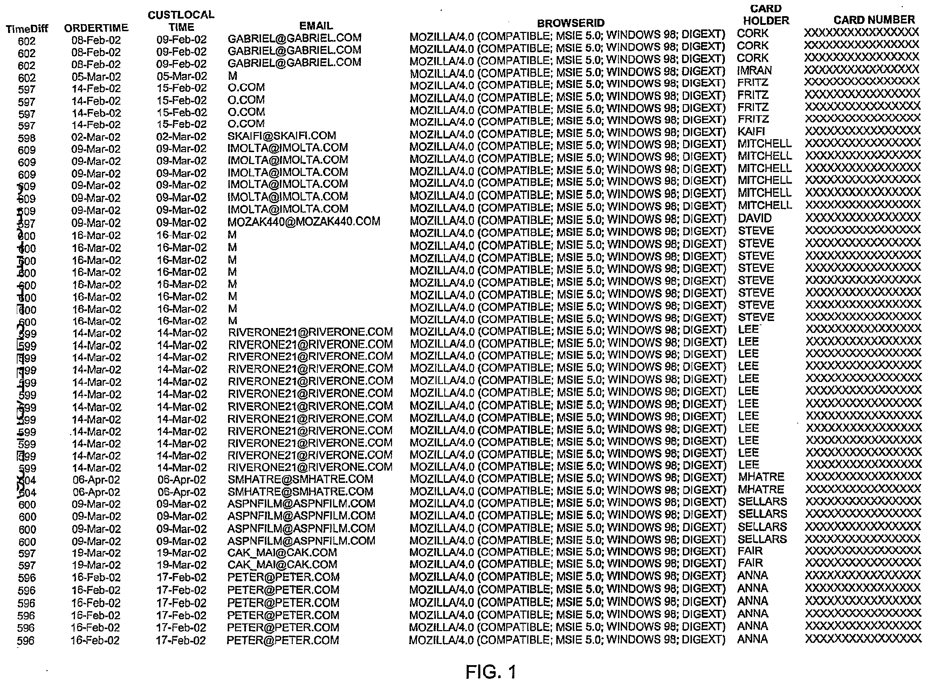

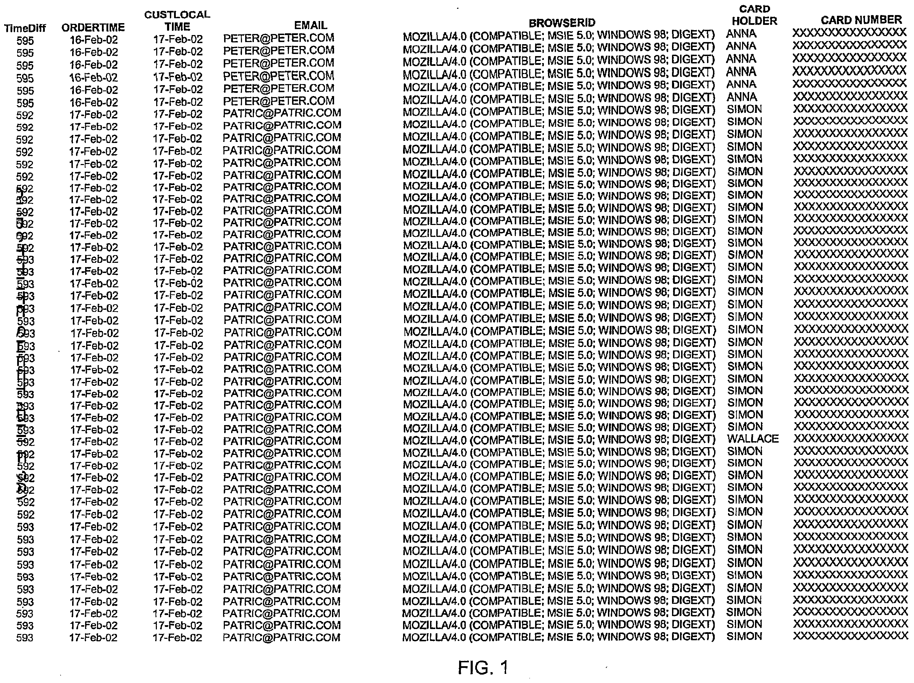

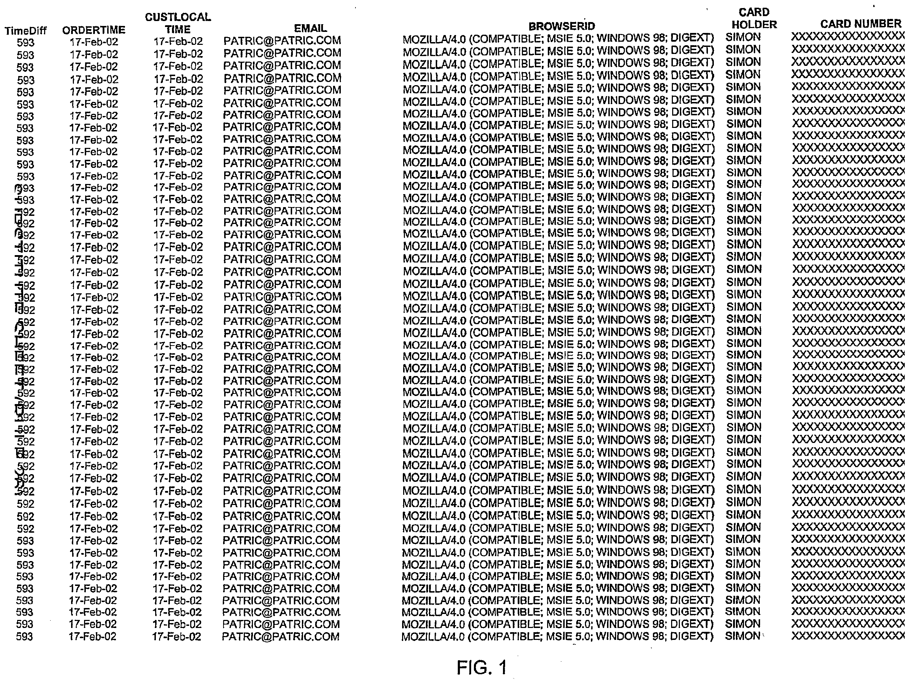

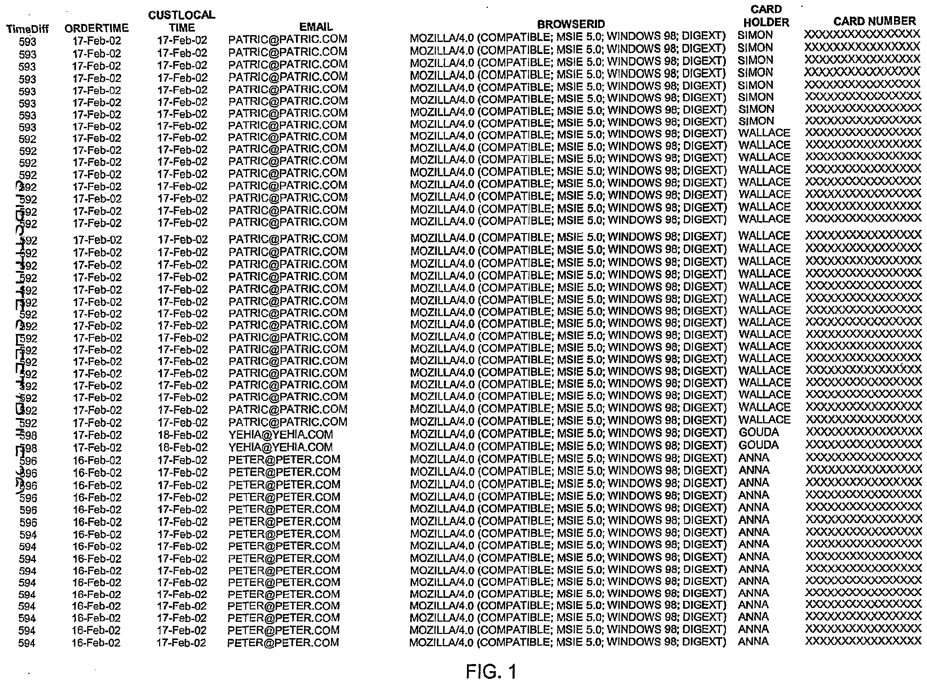

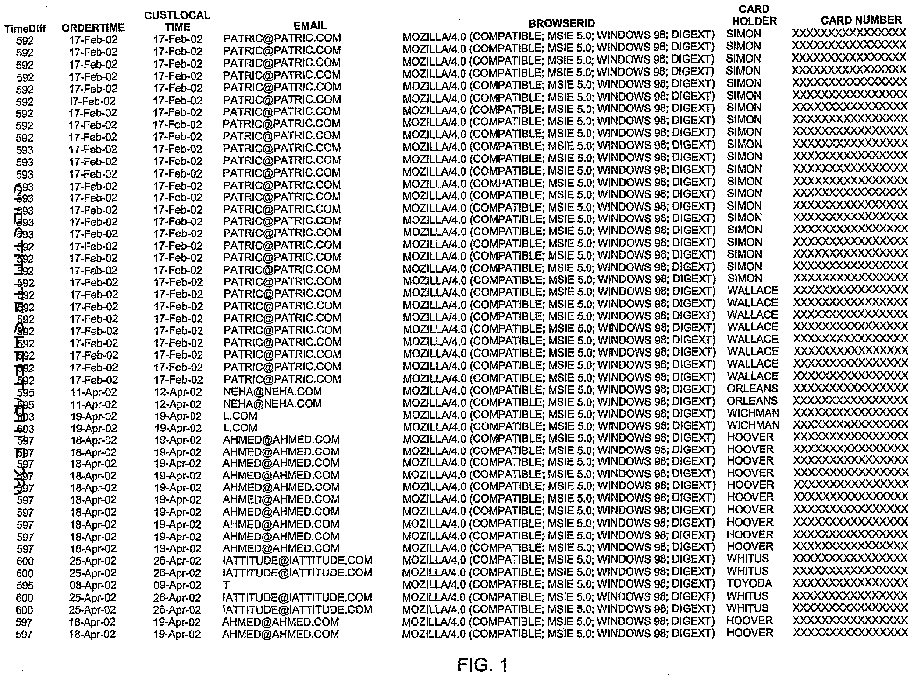

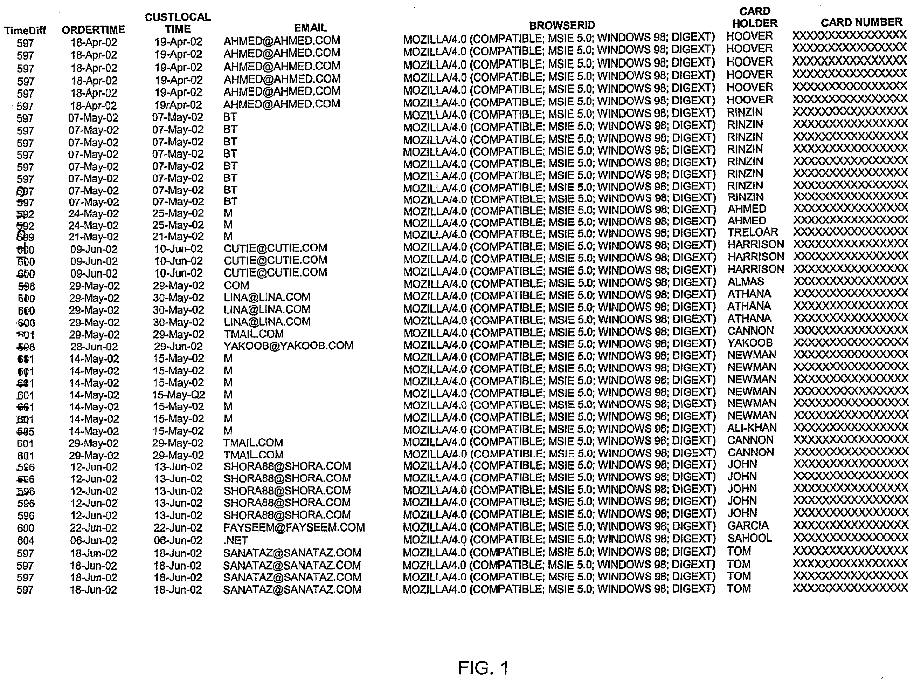

FIG. 1 is a chart that illustrates the versatility and accuracy of the invention in weeding out possible fraudulent online transactions.
FIG. 2 describes a connection between a customer computer and a merchant website server whereby each device maintains respective times according to a resident clock.
FIG. 3 is an index of different Time Zones around the world.
FIG. 4 is a flowchart describing an embodiment of the invention that provides a customer computer identifier.
FIG. 5 describes components of a customer computer identifier provided in accordance with the invention.
FIG. 6 illustrates a comparison of computer identifiers that provides a matching parameter for consideration by an online merchant.
FIG. 7 shows various components and parameters that may comprise a user computer identifier in accordance with an embodiment of the invention.
FIG. 8 depicts the comparison between multiple computer identifiers to provide a matching parameter that can be compared against a preselected matching value.

### DETAILED DESCRIPTION OF THE INVENTION

The present invention relates to a method and system for detecting potentially fraudulent transactions over the Internet. Various modifications to the preferred embodiment will be readily apparent to those skilled in the art and the general principles herein may be applied to other embodiments.

It is to be understood that the website, its host, or operator does not have to be a merchant of goods.

Referring to the chart shown in MG. 1, what is shown is a series ot typical transactions on the Internet between a merchant and several customers. Each customer establishes a connection between his computer and the merchant's website. Upon making this connection, the merchant's website receives some non-personal identification information from the customer. This non-personal information typically includes Common Gateway Interface (CGI) parameters such as the customer's Internet Protocol (IP) Address and the computer's Browser ID. While "hackers" can change, disguise, and/or emulate the IP address to mask a fraudulent transaction, most do not now have the capability nor the idea to do the same for the Browser ID. While some "hackers" can change the Browser ID, it is not a trivial tool and if one needs to change it all the time it is not allowing those thieves to easily steal, hence, they are likely to go to a site that does not check Browser IDs. In a typical embodiment, when the customer decides to purchase services, goods, or information from the website, the customer must input additional and more personal information. This personal identification information may commonly include the customer's name, address, billing and shipping information, phone number, and/or e-mail address. A key feature of the present invention is that the website server also captures the local time of the customer's computer, typically through a program such as Javascript, as well as the local time of the server's computer. The server then calculates the time difference (or delta of time) between the customer's computer clock and the server's computer clock. This can be recorded in any desired format such as hours, minutes, seconds, or the like, but corresponds to a delta of time parameter. The delta of time parameter, the non-personal information, including but not limited to the preferred usage of the Browser ID, and/or the personal information are stored by the merchant and used to uniquely identify the customer.

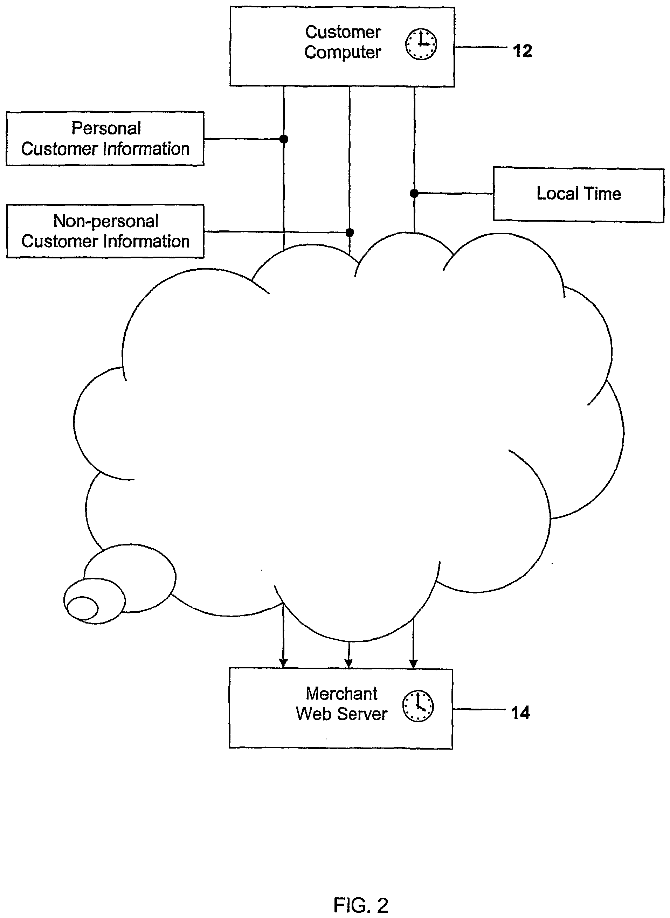

As shown in FIG. 2, a connection may be established between a customer computer 12 and a merchant website server 14. Upon making the online connection, various information is transmitted by the customer computer 12 that may operate as a unique user and/or computer identifier. This information may include personal information specific to the customer, non-personal information corresponding to the customer computer, and the local time according to the customer computer. The merchant website can receive non-personal customer information including CGI parameters such as the customers IP address and computer Browser ID. The customer can further input personal information when making a purchase from the website including a customer name, address, billing and shipping information, phone number, and/or e-mail address(es). In accordance with this embodiment of the invention, the relative customer computer local time according to its resident clock may be captured, typically through a program such as Javascript or any other time indicator employed by telecommunications and networking systems such as timestamps within transmitted data packets (e.g., TCP timestamps in packets within a data stream wherein each packet includes a header portion containing a 32-bit timestamp generated by a originating computer according to local resident time). The local time of a customer computer or client may be captured during any selected moment of action such as when the customer visits or is logging into a merchant site, at the time of a purchase or at times during an exchange of information that can be reflected in timestamp to data packets transmitted across a selected network or the Internet. At the same time, the merchant web server also maintains and measures a relative website server local time according to a resident clock. The time difference or delta of time as between the customer computer clock and the servers computer clock can be therefore calculated. This approach in determining when to measure a time of action or event may be characterized as opportunistic in that measurements are taken at selected moments in time. The delta of time can be measured, calculated and recorded by the merchant web server or any other computer operating with or connected to the merchant online system. The delta of time may be measured in any desired format or increments of time such as hours, minutes, seconds, milliseconds (microseconds) or the like. Over different periods of time, the delta of time parameters are generally persistent with relatively high degree of accuracy. Accordingly, the measured time difference between these computer clocks provides a fraud parameter in accordance with this aspect of the invention that may link or associate a particular customer computer with transactions that may involve fraud.

The delta of time (Time Diff) parameter provided in accordance with this aspect of the invention may function alone or combined with other parameters to provide what may be characterized as a "PC fingerprint." Such devices include personal computers or any other type of computing devices or computers including those from Apple Computer, Inc. (hereinafter collectively PC). Each PC connected to the Internet may be configured slightly different and may possess identifiable characteristics distinguishing it from other devices which can be exploited by the invention. A more accurate PC fingerprint may be generally developed by considering a greater number of available computer related parameters. The Time Diff parameter may serve as part of a PC fingerprint for identifying a device which serves as a distinctive mark or characteristic about a particular user device. In addition to a Time Diff parameter, the flow of information exchanged during an Internet session may be captured and provide significant information about the user device on the other end. This type of information exchange considered by the invention is preferably invisible and transparent to users, and does not rely on user action or modification of online behavior. The Time Diff parameter may thus link incidents involving fraud, hacking, phishing etc. by automatically correlating information such as login data, computer data and customer data. For example, by analyzing data sent from the user device, information about the device and browser used by an individual may be obtained such as a Browser ID, the Browser/device IP address and the particular Browser language. By formulating a more accurate PC fingerprint, there is less likelihood of mistakenly associating a user with a fraudulent transaction (false positive) during e-commerce transactions, or failing to detect a fraudster. Other applications of the invention include national security and law enforcement whereby a computer can be uniquely identified in a manner similar to way thieves can be identified by a physical fingerprint. Accordingly, a PC fingerprint provided by the invention enables the ability to link and connect different online accounts and activity to a same device.

The Time Diff parameter provided in accordance with the invention may be captured or measured during various selected moments of action during an Internet session such as the login step or procedure. Today it is estimated that medium to large e-commerce merchants and financial institutions receive over 5,000 orders per day for digital and shipped goods, and over 100,000 logins per day. Many Internet Service Providers (ISPs) also manage accounts and user logins on an enormous scale also. This aspect of the invention can be applied to broader applications online to authenticate a user or uniquely identify a computer on the Internet in addition to e-commerce transactions and fighting fraud or identify theft. For example, the invention may be applied where a merchant or financial institution (FI) server resides in California, USA and a valid customer (Customer) who also normally resides in California, USA. It shall be understood that the following examples below describe login procedures which could be modified according to the invention for any other selected moment of action during an Internet session such as logout procedures, when a user clicks a "submit" button within a user interface, or transmission of any other information between users online.

During a "valid" login procedure, the Customer may initiate a login procedure from a web browser on a computer that registers a time according to its clock as follows: Time = 11:00 am / Time Zone: GMT -8 and an IP address from the California region. Meanwhile, from the perspective of the FI, the recorded time at the FI server according to its respective clock may be: Time = 11:01 am / Time Zone: GMT -8 and an IP address from the California region. It shall be understood that the invention may incorporate IP address locator tools which determine an identifier for an online device and its location based on geographic regions within a country or around the world. Upon analysis of this information from the Customer that may be reflected on a conceptual or actual Score Card, which can be calculated and stored in memory within the server of the FI or any its other network computers, the FI can determine whether there is a match indicating a valid user login. Accordingly, the exchange of information in the above described example may be reflected as a match on or as a Score Card that measures the validity of the customer: Time Diff = Match / Time Zone = Match / IP = Match.

During a "suspect" login procedure, a Customer may initiate a login procedure from a web browser on a computer that registers a time according to its clock as follows: Time = 10:02 pm / Time Zone: GMT +3 and an IP address from a region in Russia. Meanwhile, from the perspective of an FI, the recorded time at the FI server according to its respective clock may be: Time = 11:01 am / Time Zone: GMT -8 and an IP address again from its California region. Upon analysis of this information from the Customer in accordance with the invention, the Time Diff and Time Zone measurements as between the Customer and the FI are different from prior valid logins and therefore not a match. Furthermore, the IP address received by the FI indicating a device outside of the California region would not be a match and further suggest an invalid login attempt by a fraudster or other unauthorized individual. The Score Card for this login example measuring the validity of the customer can thus show: Time Diff = No Match / Time Zone = No Match / IP = No Match. The FI would be thus alerted that the alleged Customer attempting to login was likely invalid.

During a "valid" login procedure from a Customer traveling with a computer and browser in London, the Customer may initiate a login procedure at a registered time according to its clock as follows: Time = 11:00 pm / Time Zone: GMT -8 and an IP address from a region around London. Meanwhile, from the perspective of an FI, the recorded time at the FI server according to its respective clock may be: Time = 11:01 am / Time Zone: GMT -8 and an IP address again from its California region. Upon analysis of this information from the Customer, the Time Diff and Time Zone measurements as between the Customer and the FI are the same as prior valid logins and therefore a match. While the IP address received by the FI indicating a device outside of the California region would not be a match and suggest an invalid login attempt, the comparison of the Time Diff and the Time Zone measurements would be a match. Because the Time Diff parameter provided in accordance with the invention can be used in combination with other fraud parameters for authentication and identification, a Score Card for this login example measuring the validity of the customer could still show a match nevertheless: Time Diff = Match / Time Zone = Match / IP = No Match.

The Time Diff parameter provides fraud detection tools for online merchants, financial institutions and other parties conducting commerce on the Web. These tools can be applied to combat well recognized problems such as reducing the number of false positives which reduce possible revenue from mistakenly identified valid users. In addition, Time Diff based tools provide an effective solution to identifying and preventing fraud during the course of international and overseas transaction where there are significantly increased risks of fraudulent activity. Accordingly, the Time Diff parameters herein allow the creation of a more accurate and relevant geo-location or PC fingerprint for many different types of online transactions around the world.

It shall be understood that the Time Diff parameters provided in accordance in this aspect of the invention may be defined as the difference in the registered computer times as measured in any unit of time (e.g., hours, minutes, seconds, milliseconds, microseconds) between any selected computers either alone, or in combination with the Time Zone herein or any other temporal characteristics. Furthermore, as with other embodiments described herein, the concepts of the invention can be preferably applied to e-commerce transactions to deter or identify fraud but is not limited thereto and are equally applicable to any other online application to uniquely identify and link a computer device on the Internet according to a Time Diff parameter. While consideration of Time Diff parameters alone may not be completely effective as with any solution against fraud, phishing etc., the PC fingerprinting methods and techniques provided herein enables effective link analysis between computer devices and compromised accounts or any other transaction having or associated with a fraudulent past or history. By following and learning from historical incidents of security breaches and fraud, the invention can quickly pinpoint repeat offenders and build a stronger defense against different criminal behavior or schemes now known and those that will be developed in the future.

Another embodiment of the invention provides a delta of time (Delta Time) parameter that can be calculated based on the local time as indicated through the browser of a client computer (Browser Time) and the local time as determined at a server (Server Time) - also applicable in FIG. 2. The Delta Time may operate as a fingerprint for a particular client computer or computer and assists in uniquely identifying it from other computers on the Internet or selected network. Each local time for any client or server connected to the Internet or other network system can be measured according to the clock for that particular device. The measured Delta Time parameter for any selected moment of action in accordance with the invention may be perceived as having two temporal components: an actual time and a time zone. For example, the measured local time at a client site may include a Browser Time of February 1, 2005 14:00:00 PM, and a Browser Time Zone of GMT -8. The measured local time at a server site may include a Server Time of February 1, 2005 17:01:13 PM, and a Server Time Zone of GMT -5. The Delta Time as between the Browser Time and the Server Time, and the Browser Time Zone in comparison to the Server Time Zone, can be therefore calculated in accordance with the invention.

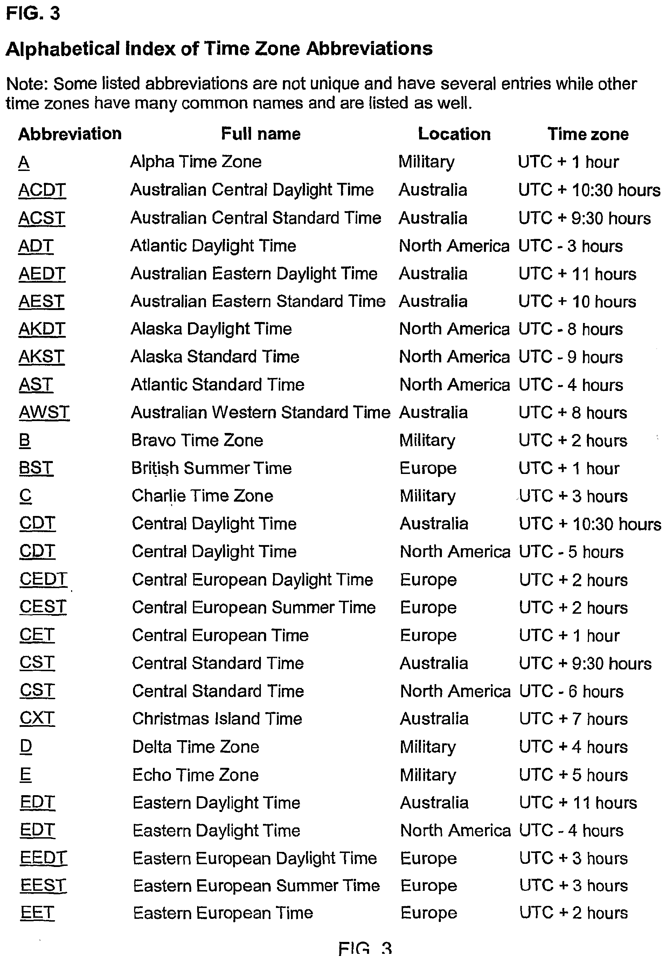

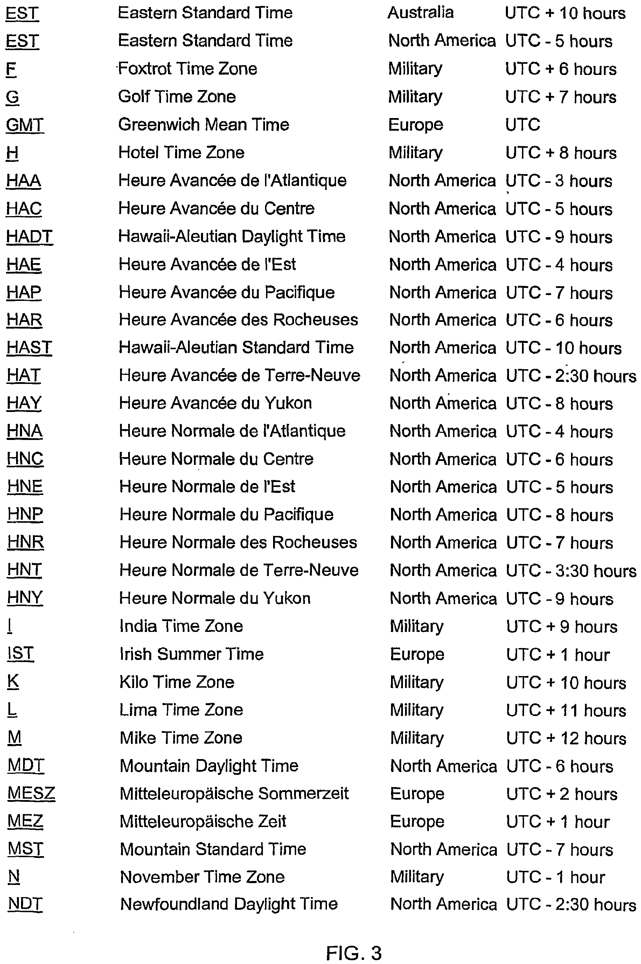

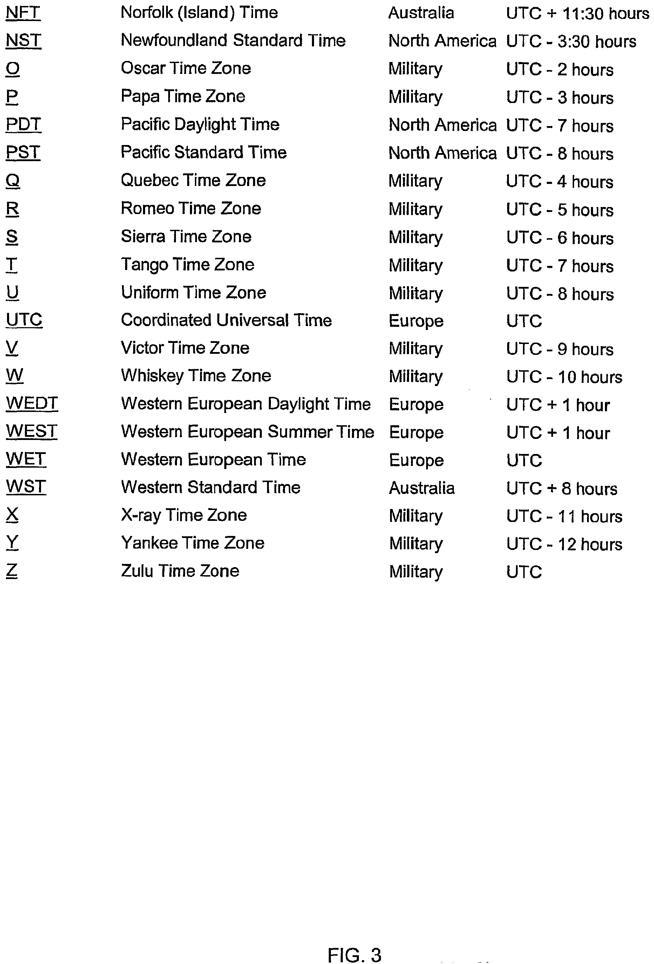

A preferable embodiment of the invention provides a Delta Time or time differential which takes into consideration daylight saving time (DST) in selected time zones and countries around the world such as those identified in FIG. 3. In addition to collecting respective local times and time zones from clients or customer computers and website servers at a current selected date or moment of action, a website server or any other network computer can also capture information relating to particular time and time zones for selected (future or even past) dates. A selected Delta Time during DST (DST Delta Time) can be determined for a particular customer or client computer when the registered time for such other date is different than the current selected date. For example, the Delta Time value for such other date(s) can be +/- one hour ahead or behind. For time zones that do not observe DST, the Delta Time value will remain unchanged during such dates when DST would be normally observed. By calculating and identifying values for Delta Time and relevant Time Zones for multiple dates ahead of time in accordance with the invention, accurate delta of time values can be provided to assist in uniquely identifying or fingerprinting a client or customer computer throughout the year regardless of whether DST is observed in the relevant country or region of the world. Because only certain countries and regions of the world observe DST while others do not, it may be possible to pinpoint in which location the device resides based at least in part on the geo-location fingerprints provided by the invention.

DST (also called Summer Time) is the portion of the year in which the local time of a region is usually advanced by one hour from its official standard time. This system was originally intended to "save" daylight, as opposed to "wasting" time (for example, by sleeping past sunrise). The official time is adjusted forward during the spring and summer months, so that the active hours of daily life involving events such as work and school will better match the hours of daylight in theory. Today approximately 70 countries utilize DST in at least a portion therein - the only major industrialized country not to have introduced daylight saving is currently Japan. DST begins for most of the United States of America at 2 a.m. on the first Sunday of April and clocks are turned (spring) forward one hour. Time reverts to standard time at 2 a.m. on the last Sunday of October and clocks are turned (fall) back one hour. Each time zone switches to and from DST at a different time. Furthermore, legislation may be passed by Congress and other state governmental bodies from time to time on whether to observe, shorten or lengthen DST. DST for the United States of America and its territories is not observed in Hawaii, American Samoa, Guam, Puerto Rico, the Virgin Islands, most of the Eastern Time Zone portion of the State of Indiana, and the state of Arizona (except the Navajo Indian Reservation which does observe DST). Meanwhile, for all countries in the European Union except Iceland, Summer Time begins and ends at 1 am Coordinated Universal Time, UTC (Greenwich Mean Time, GMT) which generally starts on the last Sunday in March, and ends the last Sunday in October. All time zones change at the same moment in the EU. It shall be understood that observance of DST is controversial and ever changing so the delta of time parameter provided in accordance with this embodiment of the invention can be flexibly adapted to devices all over the world when it changes and whether or not DST is observed in certain countries or states within particular time zones.

In this embodiment of the invention, various time zones as shown in FIG. 3 can be predetermined such that it is known ahead of time whether or not DST is applicable for that region. For example, a Delta Time parameter may be calculated for a client computer at some future date(s) during DST. When the clock of a client computer registers a time of 8:00 pm PST (Greenwich Mean Time GMT -8) on a selected date during the fall season, its respective delta of time is changed one hour ahead to 9:00 pm PST (GMT -8) on a selected date in the spring season to account for DST when applicable. By collecting and determining times at one or more selected dates in the future, it is possible to determine whether a device will or will not go into DST from the beginning rather than waiting until later to see whether the registered time is the same or different. This will also assist in identifying the country or region for a selected user device. Accordingly, seemingly unrelated transactions can be linked at least in part from a distinctive timestamp delta of time (Delta Time) that can be measured from the internal clock or data (TCP, NTP, RTP etc. timestamps within data packets) sent from the device. It should be understood that the Delta Time parameter can be calculated according to any selected units of time as with other embodiments of the invention herein such as minutes, seconds, or milliseconds.

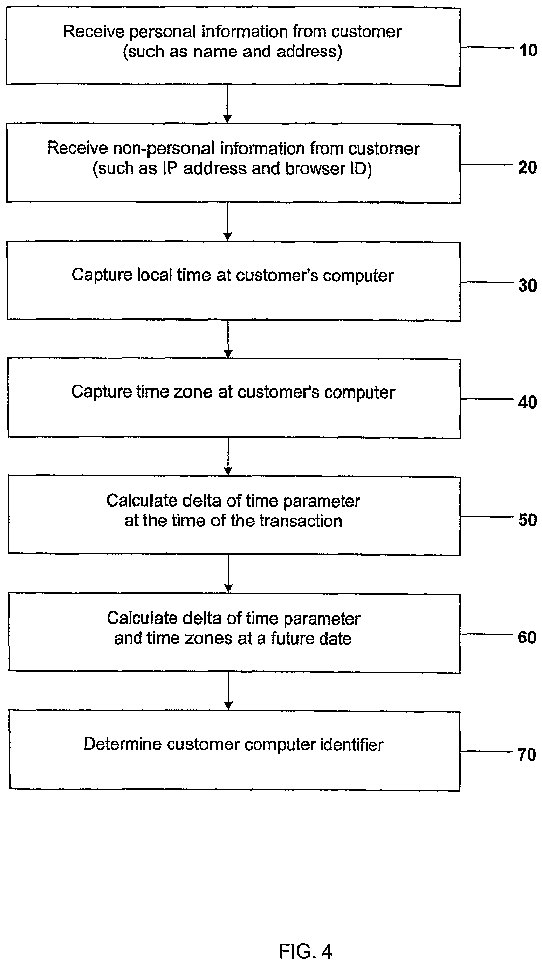

FIG. 4 is flow chart depicting another aspect of the invention that provides methods for determining a customer computer identifier (CI) used in detecting fraud in connection with online commercial transactions. At step 10, a merchant web server receives customer personal information, such as name, address, phone number, etc. At step 20, the web server receives non-personal information from the customer such as IP address and Browser ID. At steps 30 and 40, the web server captures the local time and the time zone at the customer computer. The delta of time parameter is then calculated at the time of the transaction at step 50. It should be noted that the delta of time parameter may be calculated at the time of the customer login, other times during a transaction or at any selected moment of action. At step 60, the delta of time parameter and time zones are calculated at one or more future selected dates. Using the customer information and the delta of time parameters, the customer computer identifier is determined at step 70. Any one or more of these steps may be used in combination with each other and in a different order of operation depending on selected applications. It should be further understood that processes in accordance with this embodiment of the invention may provide a delta of time parameter and a computer identifier described elsewhere herein and also used together with other aspects of the invention, e.g. FIG. 2.

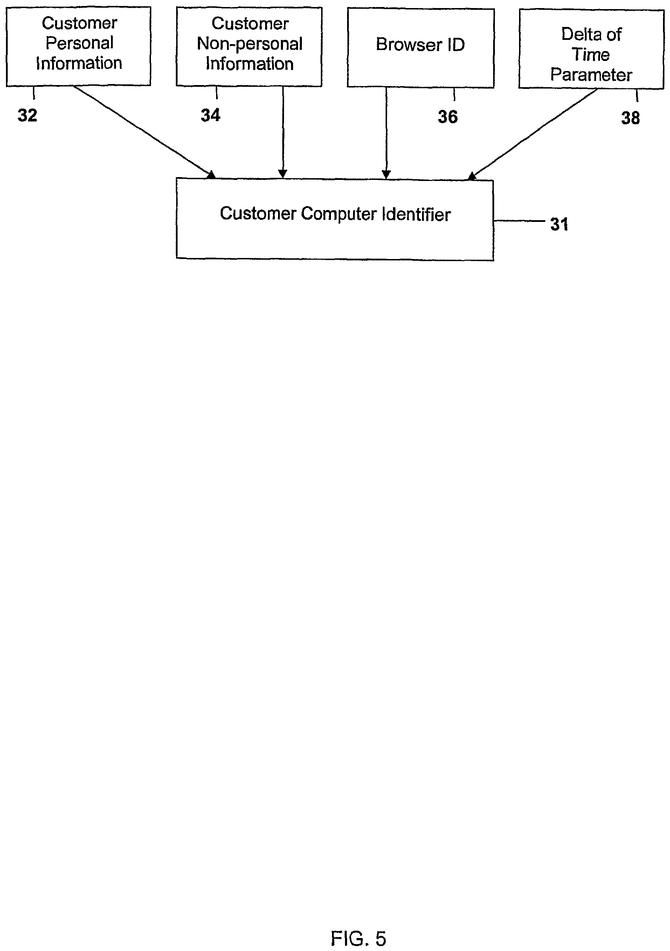

In another preferable embodiment of the invention, as illustrated in FIG. 5, a particular subset of selected parameters or fields can combined or aggregated to construct a customer computer identifier 31. For example, the customer computer identifier 31 can be determined based on selected customer personal information 32, customer non-personal information 34, including a Browser ID 36 and a delta of time parameter 38. These selected parameters are not meant to be limiting and other information or fraud parameters described herein or otherwise known to those of ordinary skill may be used to create a customer computer identifier 31. Specifically, another preferable embodiment of the invention includes a customer computer identifier consisting of a delta of time parameter plus a Browser ID alone which can be used to identify or "fingerprint" a user computer. But the selected customer information 32 alone is not entirely reliable by itself as it can not be easily validated as suggested above. Nevertheless when combined with non-personal information 34, and in particular a measured delta of time parameter, other embodiments of the invention may provide reliable and effective methods of identifying computers on the Internet such as those associated with known fraudulent transactions. The delta of time parameters provided in accordance with this and other aspects of the invention herein offer fingerprinting capabilities that uniquely identify particular computing devices used in e-commerce transactions. Because computer users rarely personally change the internal clocks within their computers, the delta of time parameter will likely be the same (or within a range or within predictable limits) for a computer every time that computer is used to conduct an online transaction with the same merchant even if the user disguises or changes the IP address. The Browser ID is also not likely to be changed, even by a consumer seeking to perpetuate a fraudulent transaction. Thus, the delta of time parameter (the difference between the time of day of the computer user's clock and the time of day on the website's server clock as in FIG. 2) is an important component of the computer identifier because it, along with the preferred Browser ID or other personal or non-personal information, is a good indication of the identity of a subsequent user on the same computer. The delta of time parameter also allows the merchant to potentially locate the computer in terms of a time zone, region, or country.

Accordingly, once a merchant determines that a first fraudulent transaction may have been made, the merchant can flag the customer computer identifier, i.e. Browser ID and delta of time. In a preferred embodiment, the computer identifier will include at least its delta of time and Browser ID, but may also include other personal and/or non-personal information. Then, the matching parameter can be used to identify a subsequent transaction which reveals a user with an identical set of computer identifiers. The matching is typically implemented by software, for example, on a hard disk, floppy disk, or other computer-readable medium.

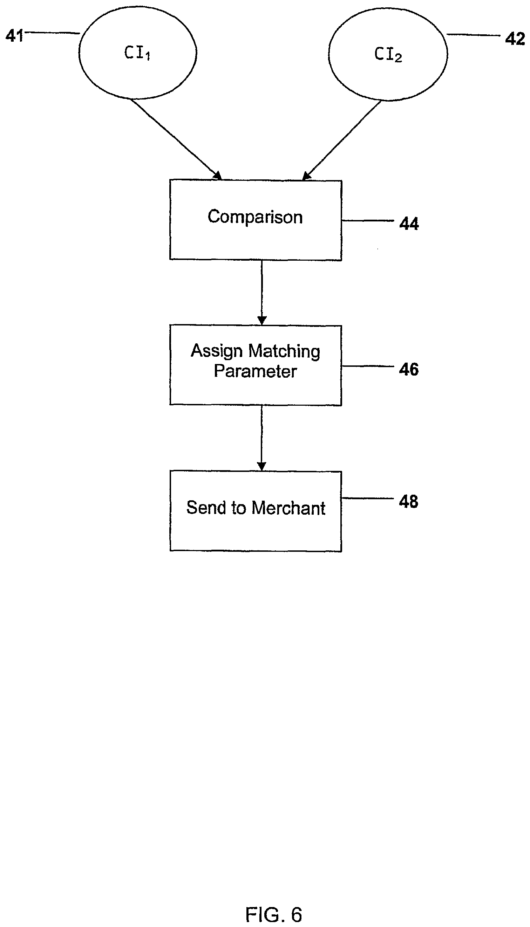

A flowchart is provided in FIG. 6 that illustrates methods to detect fraud according to examples helpful for understanding the context of the invention. Once a merchant web server determines the computer identifier (CI) for a first transaction, CI ₁ 41 and a subsequent transaction, CI₂ 42, a comparison can be made as between the two identifiers 41 and 42 and performed at step 44 as illustrated. After the comparison has been made, a computer implemented software program may continue to execute the next step of assigning a matching parameter value to the pair of transactions based on the similarities between the first and subsequent transactions, at step 46. At step 48, the website server running the program to compare computer identifiers may inform the merchant of the matching parameter value, which in turn may provide information suggesting to cancel or confirm the transaction, inform the costumer status order, demand more information, or the like. The merchant may then choose its desired course of action. It shall be understood that the memory of a merchant web server may contain software programs with instructions to perform any combination of these steps to provide these and any other methods described herein in accordance with the invention.

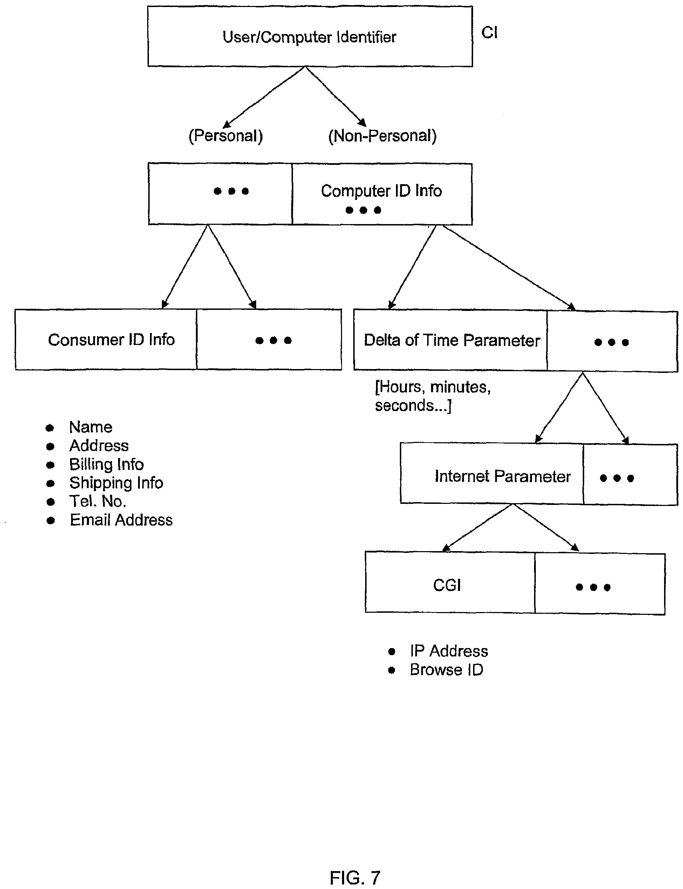

FIG. 7 provides a hierarchical representation of user computer identifiers (CIs) for the identification and prevention of online fraud that may be generated as described with the various embodiments of the invention. A computer identifier (CI), which may uniquely identify a computer associated or linked to known fraudulent transactions (or for alternative purpose described herein), may comprise both personal and non-personal parameters. Personal parameters may include consumer identification (ID) information and other selected personal parameters. Examples of selected consumer ID information include but are not limited to the following: user or personal name, address, billing information, shipping information, telephone number(s), e-mail address(es). Meanwhile, non-personal parameters may include a variety of known fraud parameters including computer identification (ID) information. This includes delta of time parameters as described herein which may be measured in any increment of time such as hours, minutes, seconds and milliseconds. Other computer ID information includes Internet Parameters such as Common Gateway Interface (CGI) parameters including a customer computer Internet Protocol (IP) Address and Browser ID.

A particularly important feature of the present invention is the merchant's ability to include, remove, and weigh each parameter within the computer identifier. For example, the merchant may choose to only use the delta of time parameter and Browser ID to form the unique computer identifier. Accordingly, the merchant may set the matching parameter to fit a level of comparison between the first and subsequent transaction. For example, since deltas of time may slightly change because of the differences in accuracy between the server and the user computer clock mechanism, computer clocks and deltas may slightly vary over time. The merchant may set the matching parameter to include a range of delta of time, such as a few minutes, instead of an exact match. This way, even if the user computer "loses time," the matching parameter will still identify the subsequent transaction as a potential fraudulent one based on other information within the computer identifier.

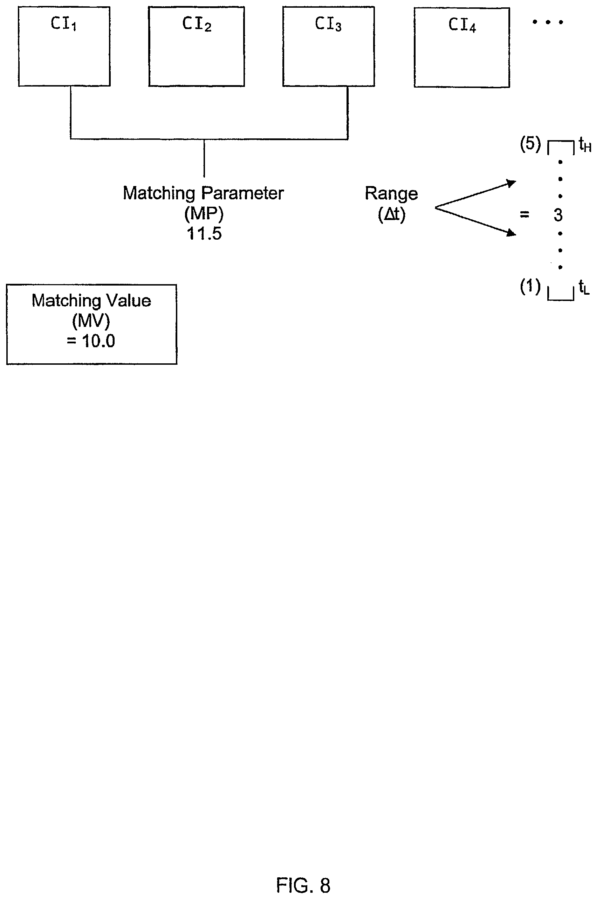

A series of computer identifiers (CIs) are shown in FIG. 8 which can be matched, e.g., CI₁ - CI₄... When a CI is generated by a method or software program by a computer to be identified or associated with a known fraudulent transaction, it can be compared to another selected CI. During a comparison step between the two, a matching parameter (MP) may be calculated. The calculated value of the MP may consist of a raw number or score that is dimensionless, e.g., 11.5, or some increment of measurement including time, e.g., hours, minutes, seconds, milliseconds. The matching parameter may be thus compared in a next step to a preselected reference or baseline Matching Value (MV), e.g., 10.0. A merchant or anyone trying to identify the computer can variably set the MV relative to anticipated or measured MP values. Because of slight differences in computer clocks, network latency, variable Web traffic and bandwidth constraints, the delta of time parameters provided herein may vary from time to time even for the same selected computer. A preselected range (delta t) may be therefore defined in accordance with this aspect of the invention that allows for a certain tolerance setting or range (Range) of MP values relative to the MV. For example, an lower limit within the Range may allow for a [+/- 1] variance of the MP value relative to the MV, or a higher limit within the Range may allow for a [+/- 5] variance. When the MP value falls within the defined Range relative to the MV, this can indicate a positive match or identification (ID) of a device for various purposes as described herein such as linking a computer to known online fraudulent transactions. When the MP value falls outside of the defined Range relative to the MV, this can indicate a negative match or identification (ID) of a device. It shall be understood that these MP values may be alternatively defined as a Score Card value and incorporated with other corresponding aspects of the invention described elsewhere herein to detect and prevent online fraud. The matching parameters, values and ranges described in accordance with this variation of the invention can be modified and defined in a variety of ways and are not limited to those specifically provided for illustrative purposes. The preceding steps may be carried out as methods provided herein, or alternatively as a series of software program instructions and code.

Furthermore, in accordance with another concept of the invention, the delta of time parameter may be measured as between different times resulting from inherent limitations or flaws of the computer clock(s) in a single device as opposed to multiple devices. In this embodiment of the invention, a device fingerprint or PC fingerprint is created to uniquely identify and link a computer to known fraudulent transactions or behavior by measuring and tracking an inherent inaccuracy or flaw of a resident clock: In comparison to other embodiments of the invention, which may be described as an "external" delta of time as between two different devices (host server / user client), another variation provided herein provides a device identifier using what may be considered an "internal" delta of time as between a single device itself (standalone). Over a period of time, computers clocks as with other ordinary clocks are not perfect and tend to run fast or slow eventually. The rate at which time is gained or lost for a computer clock may be defined as "clock skew" and can be measured in microseconds per second (clock skew may be also defined as the instantaneous difference between readings of any two clocks or the time what a computer thinks it is as compared to another clock). If the clock has a non-zero skew, not only is the end-to-end delay measurement off by an amount equal to what can be defined as clock offset, it also gradually increases or decreases over time depending on whether it is running relatively faster or slower. Even when there is a constant clock skew, the clock offset values increases or decreases over time depending on the sign (+/-) of the skew. So any given computer or device described herein can have a single or multiple clocks (e.g., systems clock, TCP timestamps options clock) that are unable to remain consistent and accurately track time. But the clock skew of a particular device may be different from other (even seemingly identical) computers, and thus serve as a PC fingerprint linking it to certain transactions and fraud. It is generally well known that different computer systems have different and relatively constant clock skews. This imperfection or flaw in the device can thus exploited in a way to identify a particular device or computer in relation to certain transactions and behavior since it is relatively persistent and unique in accordance with the invention. The internal delta of time provided in accordance with this embodiment can be therefore applied in the same manner as any other external delta of time described elsewhere herein to provide a PC fingerprint linked to transactions carried out on devices involving e-tail or e-commerce fraud, breaches in security and various types of criminal online behavior.

In this embodiment of the invention, the delta of parameter can be measured in units of microseconds per second (ms/s, first derivative or rate at which time is gained or lost) while in other embodiments of the invention the parameter can be measured in microseconds. This delta of time parameter can therefore be defined as a time difference measured between a first clock measurement and a second clock measurement over a selected period of time or time interval. For example, the TCP timestamp of a first packet of data from a computer may indicate a time t1 (9:01am) while a second packet may be sent at time t2 (9:02am). The first and second packets may arrive at a server at times t3 (9:04am) and t4 (9:07am), respectively. The clock skew of the computer can be thus calculated as the rate at which time is lost in this instance: t3-tl = 3 mins; t4-t2 = 5 mins (may assume time differences are not attributed to network delays, latency etc. beyond clock skew). The internal delta of time parameter or clock skew in the context of this embodiment of the invention herein may be calculated as follows: 5 mins - 3 mins = 2 mins divided by 3 mins (which is the selected period of time between first and second packets). In other words, during the 3 mins of time between sending the first and second data packets, the computer clock lost or ran slow 2 mins (0.666 min/min). While clock skew in general is instead measured on the order of microseconds rather than minutes, this example illustrates how these and other embodiments of the invention are not limited to certain ranges. Other units of measurements are applicable to the delta of time parameters as mentioned elsewhere herein. It shall be understood that both internal and external deltas of time can be applied individually or in combination by themselves, or in addition to other parameters as described herein to provide a distinctive PC fingerprint.

It shall be understood that the description of fraudulent schemes provided herein is not exhaustive and that additional techniques will be developed in the future to improperly gain access to user information. Regardless of the means and methods used to obtain such information, the concepts of the invention can be applied to detect and prevent fraud by uniquely linking or fingerprinting such criminal activity with devices based upon selected delta of time parameters, clock differentials and time based parameters provided elsewhere herein. These solutions can be implemented with no behavioral modification and have a zero imposition on a user as new ways are constantly developed to break past security barriers. The onus is not placed on the consumer to prevent attacks, nor is the consumer asked to change certain behavior to combat phishing or any other criminal behavior or scheme developed in the future.

## Claims

1. A method for identifying a user computer from other computers, the method comprising the steps of:
in the course of a first online transaction between a computer (12) and a merchant web server (14):
obtaining information (34, 36) about the computer including a first local computer time according to a resident computer clock of the computer;
measuring a first local server time of the merchant web server;
calculating a first delta of time parameter (38) based upon a difference in time between the first local computer time and the first local server time;
generating a first computer identifier (31) based at least in part on the first delta of time parameter;
in the course of a second online transaction between the computer and the merchant web server:
obtaining information about the computer including a second local computer time according to the resident computer clock;
measuring a second local server time of the merchant web server;
calculating a second delta of time parameter based upon a difference in time between the second local computer time and the second local server time;
generating a second computer identifier based at least in part on the second delta of time parameter;
flagging the first computer identifier in response to determining the first online transaction may be a fraudulent transaction;
comparing the first computer identifier and the second computer identifier;
determining that a measured difference between the delta of time parameter of the first computer identifier and the delta of time parameter of the second computer identifier falls within a selected range; and
generating an indication that the computer was used in the first online transaction and the second online transaction, based at least on the determination that the measured difference falls within the selected range.

2. The method as recited in claim 1, wherein the first local computer time, the first local server time, the second computer time, and the second local server time are each measured using a JavaScript.

3. The method as recited in claim 1, wherein each computer identifier further includes additional parameters including personal identification information.

4. The method as recited in claim 3, wherein the personal identification information includes consumer identification information.

5. The method as recited in claim 4, wherein the consumer identification information includes at least one of the following: consumer name, address, billing information, shipping information, telephone number and e-mail address.

6. The method as recited in claim 1, wherein each computer identifier further includes at least one non-personal identification parameter.

7. The method as recited in claim 6, wherein the non-personal identification parameter is computer identification information.

8. The method as recited in claim 7, wherein the computer identification information includes an Internet parameter.

9. The method as recited in claim 8, wherein the Internet parameter is a CGI parameter.

10. The method as recited in claim 9, wherein the CGI parameter includes a Browser ID.

11. The method as recited in claim 1, wherein each computer identifier includes relevant time zone information in which the user computer is physically located.

12. The method as recited in claim 1, wherein the first delta of time parameter and the second delta of time parameter are stored as a range of time.

13. A computer readable medium having instructions stored thereon that, when executed by a processor, cause the processor to perform a method to identify a user computer from other computers for an online transaction with a merchant, the method comprising:
in the course of a first online transaction (12) between a computer and a merchant web server (14):
obtaining information (34, 36) about the computer including a first local computer time according to a resident computer clock of the computer;
measuring a first local server time of the merchant web server;
calculating a first delta of time parameter (38) based upon a difference in time between the first local computer time and the first local server time;
generating a first computer identifier (31) based at least in part on the first delta of time parameter;
in the course of a second online transaction between the computer and the merchant web server;
obtaining information about the computer including a second local computer time according to the resident computer clock;
measuring a second local server time of the merchant web server;
calculating a second delta of time parameter based upon a difference in time between the second local computer time and the second local server time;
generating a second computer identifier based at least in part on the second delta of time parameter;
flagging the first computer identifier in response to determining the first online transaction may be a fraudulent transaction;
comparing the first computer identifier and the second computer identifier;
determining that a measured difference between the delta of time parameter of the first computer identifier and the delta of time parameter of the second computer identifier falls within a selected range; and
generating an indication that the user computer was used in the first online transaction and the second online transaction, based at least on the determination that the measured difference falls within the selected range.

## Patentansprüche

1. Verfahren zum Identifizieren eines Anwendercomputers von anderen Computern, wobei das Verfahren die folgenden Schritte umfasst:
im Verlauf einer ersten Online-Transaktion zwischen einem Computer (12) und einem Händler-Web-Server (14):
Erhalten von Informationen (34, 36) über den Computer, die eine erste lokale Computerzeit gemäß einer residenten Computeruhr des Computers enthalten;
Messen einer ersten lokalen Server-Zeit des Händler-Web-Servers;
Berechnen eines ersten Zeitdifferenzparameters (38) anhand eines Zeitunterschieds zwischen der ersten lokalen Computerzeit und der ersten lokalen Server-Zeit;
Erzeugen einer ersten Computerkennung (31) zumindest teilweise anhand des ersten Deltas des Zeitparameters;
im Lauf einer zweiten Online-Transaktion zwischen dem Computer und dem Händler-Web-Server:
Erhalten von Informationen über den Computer, die eine zweite lokale Computerzeit gemäß der residenten Computeruhr des Computers enthalten;
Messen einer zweiten lokalen Server-Zeit des Händler-Web-Servers;
Berechnen eines zweiten Zeitdifferenzparameters anhand eines Zeitunterschieds zwischen der zweiten lokalen Computerzeit und der zweiten lokalen Server-Zeit;
Erzeugen einer zweiten Computerkennung zumindest teilweise anhand des zweiten Deltas des Zeitparameters;
Markieren der ersten Computerkennung als Reaktion auf das Bestimmen, dass die erste Online-Transaktion eine betrügerische Transaktion sein könnte;
Vergleichen der ersten Computerkennung und der zweiten Computerkennung;
Bestimmen, dass ein gemessener Unterschied zwischen dem Zeitdifferenzparameter der ersten Computerkennung und dem Zeitdifferenzparameter der zweiten Computerkennung in einen ausgewählten Bereich fällt; und
Erzeugen einer Angabe, dass der Computer bei der ersten Online-Transaktion und der zweiten Online-Transaktion verwendet wurde, zumindest anhand der Bestimmung, dass der gemessene Unterschied in den ausgewählten Bereich fällt.

2. Verfahren nach Anspruch 1, wobei die erste lokale Computerzeit, die erste lokale Server-Zeit, die zweite Computerzeit und die zweite lokale Server-Zeit jeweils unter Verwendung eines Java-Scripts gemessen werden.

3. Verfahren nach Anspruch 1, wobei jede Computerkennung ferner zusätzliche Parameter enthält, die persönliche Identifikationsinformationen enthalten.

4. Verfahren nach Anspruch 3, wobei die persönlichen Identifikationsinformationen Verbraucheridentifikationsinformationen enthalten.

5. Verfahren nach Anspruch 4, wobei die Verbraucheridentifikationsinformationen zumindest eines des Folgenden enthalten: den Verbrauchernamen, die Adresse, Rechnungsinformationen, Versandinformationen, die Telefonnummer und die E-Mail-Adresse.

6. Verfahren nach Anspruch 1, wobei jede Computerkennung ferner zumindest einen nicht persönlichen Identifikationsparameter enthält.

7. Verfahren nach Anspruch 6, wobei der nicht persönliche Identifikationsparameter Computeridentifikationsinformationen sind.

8. Verfahren nach Anspruch 7, wobei die Computeridentifikationsinformationen einen InternetParameter enthalten.

9. Verfahren nach Anspruch 8, wobei der Internetparameter ein CGI-Parameter ist.

10. Verfahren nach Anspruch 9, wobei der CGI-Parameter eine Browser-ID enthält.

11. Verfahren nach Anspruch 1, wobei jede Computerkennung relevante Zeitzoneninformationen enthält, in denen sich der Anwendercomputer physisch befindet.

12. Verfahren nach Anspruch 1, wobei der erste Zeitdifferenzparameter und der zweite Zeitdifferenzparameter als ein Zeitbereich gespeichert sind.

13. Computerlesbares Medium mit auf ihm gespeicherten Anweisungen, die dann, wenn sie durch einen Prozessor ausgeführt werden, bewirken, dass der Prozessor ein Verfahren ausführt, um einen Anwendercomputer von anderen Computern für eine Online-Transaktion mit einem Händler zu identifizieren, wobei das Verfahren Folgendes umfasst:
im Verlauf einer ersten Online-Transaktion (12) zwischen einem Computer und einem Händler-Web-Server (14) :
Erhalten von Informationen (34, 36) über den Computer, die eine erste lokale Computerzeit gemäß einer residenten Computeruhr des Computers enthalten;
Messen einer ersten lokalen Server-Zeit des Händler-Web-Servers;
Berechnen eines ersten Zeitdifferenzparameters (38) anhand eines Zeitunterschieds zwischen der ersten lokalen Computerzeit und der ersten lokalen Server-Zeit;
Erzeugen einer ersten Computerkennung (31) zumindest teilweise anhand des ersten Deltas des Zeitparameters;
im Lauf einer zweiten Online-Transaktion zwischen dem Computer und dem Händler-Web-Server:
Erhalten von Informationen über den Computer, die eine zweite lokale Computerzeit gemäß der residenten Computeruhr des Computers enthalten;
Messen einer zweiten lokalen Server-Zeit des Händler-Web-Servers;
Berechnen eines zweiten Zeitdifferenzparameters anhand eines Zeitunterschieds zwischen der zweiten lokalen Computerzeit und der zweiten lokalen Server-Zeit;
Erzeugen einer zweiten Computerkennung zumindest teilweise anhand des zweiten Deltas des Zeitparameters;
Markieren der ersten Computerkennung als Reaktion auf das Bestimmen, dass die erste Online-Transaktion eine betrügerische Transaktion sein könnte;
Vergleichen der ersten Computerkennung und der zweiten Computerkennung;
Bestimmen, dass ein gemessener Unterschied zwischen dem Zeitdifferenzparameter der ersten Computerkennung und dem Zeitdifferenzparameter der zweiten Computerkennung in einen ausgewählten Bereich fällt; und
Erzeugen einer Angabe, dass der Anwendercomputer bei der ersten Online-Transaktion und der zweiten Online-Transaktion verwendet wurde, zumindest anhand der Bestimmung, dass der gemessene Unterschied in den ausgewählten Bereich fällt.

## Revendications

1. Procédé d'identification d'un ordinateur d'utilisateur parmi d'autres ordinateurs, le procédé comprenant les étapes suivantes :
dans le cadre d'une première transaction en ligne entre un ordinateur (12) et un serveur Web commercial (14) :
l'obtention d'informations (34, 36) relatives à l'ordinateur, dont un premier temps d'ordinateur local selon une horloge informatique résidente de l'ordinateur ;
la mesure d'un premier temps de serveur local du serveur Web commercial ;
le calcul d'un premier paramètre de delta de temps (38) en fonction d'une différence de temps entre le premier temps d'ordinateur local et le premier temps de serveur local ;
la génération d'un premier identifiant d'ordinateur (31) en fonction au moins en partie du premier paramètre de delta de temps;
dans le cadre d'une seconde transaction en ligne entre l'ordinateur et le serveur Web commercial :
l'obtention d'informations relatives à l'ordinateur, dont un second temps d'ordinateur local en fonction de l'horloge informatique résidente ;
la mesure d'un second temps de serveur local du serveur Web commercial ;
le calcul d'un second paramètre de delta de temps en fonction d'une différence de temps entre le second temps d'ordinateur local et le second temps de serveur local ;
la génération d'un second identifiant d'ordinateur en fonction au moins en partie du second paramètre de delta de temps ;
le marquage du premier identifiant d'ordinateur en réponse à la détermination que la première transaction en ligne est susceptible d'être une transaction frauduleuse ;
la comparaison du premier identifiant d'ordinateur et du second identifiant d'ordinateur ;
la détermination qu'une différence mesurée entre le paramètre de delta de temps du premier identifiant d'ordinateur et le paramètre de delta de temps du second identifiant d'ordinateur est comprise dans une plage sélectionnée ; et
la génération d'une indication que l'ordinateur a été utilisé dans la première transaction en ligne et la seconde transaction en ligne, en fonction au moins de la détermination que la différence mesurée est comprise dans la plage sélectionnée.

2. Procédé selon la revendication 1, dans lequel le premier temps d'ordinateur local, le premier temps de serveur local, le second temps d'ordinateur et le second temps de serveur local sont chacun mesurés à l'aide d'un JavaScript.

3. Procédé selon la revendication 1, dans lequel chaque identifiant d'ordinateur comporte en outre des paramètres supplémentaires comportant des informations d'identification personnelle.

4. Procédé selon la revendication 3, dans lequel les informations d'identification personnelle comportent des informations d'identification de consommateur.

5. Procédé selon la revendication 4, dans lequel les informations d'identification de consommateur comportent au moins une des informations suivantes : nom du consommateur, adresse, informations de facturation, informations d'expédition, numéro de téléphone et adresse électronique.

6. Procédé selon la revendication 1, dans lequel chaque identifiant d'ordinateur comporte en outre au moins un paramètre d'identification non personnel.

7. Procédé selon la revendication 6, dans lequel le paramètre d'identification non personnel consiste en informations d'identification d'ordinateur.

8. Procédé selon la revendication 7, dans lequel les informations d'identification d'ordinateur comportent un paramètre Internet.

9. Procédé selon la revendication 8, dans lequel le paramètre Internet est un paramètre CGI.

10. Procédé selon la revendication 9, dans lequel le paramètre CGI comporte un ID de navigateur.

11. Procédé selon la revendication 1, dans lequel chaque identifiant d'ordinateur comporte des informations pertinentes de fuseau horaire dans lequel l'ordinateur utilisateur est physiquement situé.

12. Procédé selon la revendication 1, dans lequel le premier paramètre de delta de temps et le second paramètre de delta de temps sont stockés en tant que plage de temps.

13. Support lisible par ordinateur sur lequel sont stockées des instructions qui, à leur exécution par un processeur, amènent le processeur à réaliser un procédé permettant d'identifier un ordinateur utilisateur parmi d'autres ordinateurs pour une transaction en ligne avec un commerçant, le procédé comprenant :
dans le cadre d'une première transaction en ligne (12) entre un ordinateur et un serveur web commercial
l'obtention d'informations (34, 36) relatives à l'ordinateur, dont un premier temps d'ordinateur local selon une horloge informatique résidente de l'ordinateur ;
la mesure d'un premier temps de serveur local du serveur Web commercial ;
le calcul d'un premier paramètre de delta de temps (38) en fonction d'une différence de temps entre le premier temps d'ordinateur local et le premier temps de serveur local ;
la génération d'un premier identifiant d'ordinateur (31) en fonction au moins en partie du premier paramètre de delta de temps ;
dans le cadre d'une seconde transaction en ligne entre l'ordinateur et le serveur Web commercial :
l'obtention d'informations relatives à l'ordinateur, dont un second temps d'ordinateur local en fonction de l'horloge informatique résidente ;
la mesure d'un second temps de serveur local du serveur Web commercial ;
le calcul d'un second paramètre de delta de temps en fonction une différence de temps entre le second temps d'ordinateur local et le second temps de serveur local ;
la génération d'un second identifiant d'ordinateur en fonction au moins en partie du second paramètre de delta de temps ;
le marquage du premier identifiant d'ordinateur en réponse à la détermination que la première transaction en ligne est susceptible d'être une transaction frauduleuse ;
la comparaison du premier identifiant d'ordinateur et du second identifiant d'ordinateur ;
la détermination qu'une différence mesurée entre le paramètre de delta de temps du premier identifiant d'ordinateur et le paramètre de delta de temps du second identifiant d'ordinateur est comprise dans une plage sélectionnée ; et
la génération d'une indication que l'ordinateur a été utilisé dans la première transaction en ligne et la seconde transaction en ligne, en fonction au moins de la détermination que la différence mesurée est comprise dans la plage sélectionnée.
